# EUROPEAN PATENT SPECIFICATION

(11) **EP 3 001 323 B1**
(45) Date of publication and mention of the grant of the patent: **12.07.2017**
(21) Application number: 14306489.7
(22) Date of filing: 26.09.2014
(51) Int. Cl.: G06F 13/42

(54) **Serial peripheral interface**
Serielle Peripherieschnittstelle
Interface périphérique sérielle

(43) Date of publication of application: 30.03.2016
(73) Proprietor: Oberthur Technologies, 92700 Colombes (FR)
(72) Inventor: Chamley, Olivier, 92700 Colombes (FR); Morin, Nicolas, 92700 Colombes (FR)
(74) Representative: Santarelli

(56) References cited:
- EP-A1- 2 141 607
- CN-A- 103 744 825
- US-A- 5 303 227
- US-A1- 2007 067 518
- "BOSCH CAN SPECIFICATION VERSION 2.0", BOSCH CAN SPECIFICATION VERSION 2.0, XX, XX, 30 September 1991 (1991-09-30), pages 1-69, XP002291910,

## Description

### TECHNICAL FIELD

This invention relates to communication using a Serial Peripheral Interface.

### BACKGROUND

The Serial Peripheral Interface (SPI) is a serial data link that allows communication between a master device and one or more slave devices.

The Serial Peripheral Interface comprises four lines: Serial Clock (SCLK), Master Out Slave In (MOSI), Master In Slave Out (MISO) and Slave Select (SS). The lines SCLK, MOSI and MISO are connected between the master device and all of the slave devices. There is a dedicated SS line per slave device. The master uses the SS line to signal to a slave that it is currently selected for communication.

A master device can individually poll slave devices to determine if they have data to send. Another approach is to provide an additional line between a slave and the master. This additional line can be used to signal an interrupt request from a slave to the master (see e.g. EP2141607 or US5303227). A disadvantage of this approach is that it requires additional lines, and additional input/output processing at the master.

### SUMMARY

The present application is defined by the appended claims. An aspect of the invention provides a method of communicating between a slave device and a master device using a Serial Peripheral Interface, the Serial Peripheral Interface comprising a slave select line, the method comprising, at the slave device, signalling an interrupt request to the master device by changing a state of the slave select line from a first state indicative of an inactive state to a second state indicative of an active state.

The signalling can further comprise returning the slave select line to the first state.

The method can further comprise waiting for the master device to put the slave select line to the second state; and sending data from the slave device over a data line of the Serial Peripheral Interface.

The slave select line can be connected to an input/output stage of the slave device which: allows the slave select line to remain in the first state if the master device or the slave device does not change the state of the slave select line; allows the slave select line to change to the second state if the master device or the slave device wants to change the state of the slave select line.

The input/output stage can allow the slave select line to remain in the second state if the master device or the slave device wants to maintain the state of the slave select line in the second state.

Another aspect of the invention provides a method of communicating between a slave device and a master device using a Serial Peripheral Interface, the Serial Peripheral Interface comprising a slave select line per slave device, the method comprising, at the master device, determining when the slave device has requested an interrupt by detecting when the slave device changes the slave select line from a first state indicative of an inactive state to a second state indicative of an active state.

The method can further comprise, in response to determining that the slave device has requested an interrupt: selecting the slave device by putting the slave select line into the second state; and retrieving data from the slave device over a data line of the Serial Peripheral Interface.

There can be a plurality of slave devices, each connected to the master device by a respective slave select line, and the method can comprise monitoring the slave select lines of the plurality of slave devices.

The method can further comprise: receiving interrupt requests from a plurality of the slave devices; and prioritising the interrupt requests.

The slave select line can be connected to an input/output stage of the slave device which: allows the slave select line to remain in the first state if the master device or the slave device does not change the state of the slave select line; allows the slave select line to change to the second state if the master device or the slave device wants to change the state of the slave select line.

The input/output stage can also allow the slave select line to remain in the second state if the master device or the slave device want to maintain the state of the slave select line in the second state.

The input/output stage can be a general purpose input output module.

The first state can be a high state and the second state can be a low state.

The Serial Peripheral Interface can further comprise a clock line, a Master Out Slave In data line and a Master In Slave Out data line.

Another aspect of the invention provides apparatus at a slave device comprising: a Serial Peripheral Interface to communicate with a master device, the Serial Peripheral Interface comprising a slave select line, wherein the apparatus is configured to signal an interrupt request to the master device by changing a state of the slave select line from a first state indicative of an inactive state to a second state indicative of an active state.

Another aspect of the invention provides apparatus at a master device comprising: a Serial Peripheral Interface to communicate with a slave device, the Serial Peripheral Interface comprising a slave select line per slave device, wherein the apparatus is configured to determine when the slave device has requested an interrupt by detecting when the slave device has caused the slave select line to change from a first state indicative of an inactive state to a second state indicative of an active state.

The Serial Peripheral Interface at the slave device and the master device can comprise an input/output stage which is configured to: allow the slave select line to remain in the first state if the master device or the slave device does not change the state of the slave select line; allow the slave select line to change to the second state if the master device or the slave device wants to change the state of the slave select line.

The input/output stage can comprise a general purpose input output module.

The input/output stage can comprise an open collector or open drain stage with a pull-up resistor.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Another aspect of the invention provides machine-readable instructions (software) which, when executed by a processor, perform any of the described or claimed methods. The machine-readable instructions may be stored on an electronic memory device, hard disk, optical disk or other machine-readable storage medium. The machine-readable medium can be a non-transitory machine-readable medium. The term "non-transitory machine-readable medium" comprises all machine-readable media except for a transitory, propagating signal. The machine-readable instructions can be downloaded to the storage medium via a network connection.

An advantage of at least one embodiment is that a slave device can signal an interrupt request to a master device when it has something to communicate. This can avoid the need to wait until the slave device is next polled in a normal manner and can therefore reduce delays in communication between devices.

An advantage of at least one embodiment is that a slave device can signal an interrupt request to a master device without the need for an additional line between a slave device and a master device.

### BRIEF DESCRIPTION OF THE DRAWINGS

Embodiments of the invention will be described, by way of example only, with reference to the accompanying drawings in which:
Figure 1 schematically shows a master device and a plurality of slave devices connected by a SPI;
Figure 2 shows an example of signalling between a master device and a slave device over the SPI;
Figure 3 shows an example of apparatus at a device.

### DETAILED DESCRIPTION

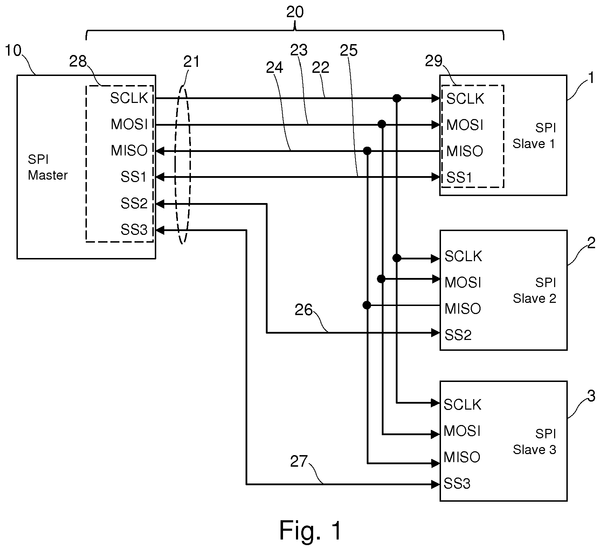

Figure 1 schematically shows a system comprising a master device 10 and three slave devices 1, 2, 3. The devices 1, 2, 3, 10 are connected by a Serial Peripheral Interface (SPI) 20. The SPI 20 comprises an interface 28, 29 at each of the devices 1, 2, 3, 10 to support the interface and lines 21 between the devices to carry signals. The lines 21 can be conductive tracks between the devices 1, 2, 3, 10. The SPI comprises: a Serial Clock (SCLK) line 22, a Master Out Slave In (MOSI) line 23 and a Master In Slave Out (MISO) line 24. The SCLK, MOSI and MISO lines are connected between the master device 10 and all of the slave devices 1-3. The SPI also comprises a Slave Select (SS) line per slave device. There is a first SS line 25 for slave device 1, a second SS line 26 for slave device 2 and a third SS line 27 for slave device 3. Another name for the Slave Select line is the Chip Select line. The interfaces 28, 29 at each device can comprise circuitry to physically connect to the lines 21 of the SPI. The interfaces 28, 29 can comprise circuitry to drive the lines 21 of the SPI. The interfaces 28, 29 can comprise circuitry to read one or more lines 21 of the SPI. For clarity, in this description each line of the SPI is described according to the signal that it carries. For example, the Serial Clock line 22 carries the Serial Clock signal. The SPI can be used between integrated circuits (chips) on the same, or different, circuit boards. Examples of the slave devices include peripheral devices and smart cards. As an example, the slave device could be a security chip embedded in a mobile phone, providing payment or authentication services to the main processor.

The lines 21 of the SPI will be described in more detail. The SCLK line 22 carries a serial clock (SCLK) signal and enables synchronous communication. The MOSI line 23 carries a data signal in the direction from the master device 10 to the slave devices. The data is synchronised with SCLK. The MISO line 24 carries data sent by a slave device towards the master device. The data is synchronised with SCLK. The SS line 25-27 permits the selection of one of the slave devices 1-3. If a slave device is not selected, that slave device ignores data sent on the MISO line 24.

A particular slave device is selected by changing the SS signal/line for that slave device from a first (inactive) state to a second (active) state. Typically, the first (inactive) state is "high" and the second (active) state is "low". Then, data is sent in one, or both, directions. Data can be sent from the master device 10 to one of the slave devices 1-3 over the MOSI line 23. Data can be sent from one of the slave devices 1-3 to the master device 10 over the MISO line 24. Only one of the slave devices 1-3 is selected at a time.

The master 10 may poll individual slave devices 1-3 according to a polling order. The polling order may poll the slave devices 1, 2, 3 in sequence, or some other polling order.

In addition to the conventional use of the SS line to signal which slave device is currently selected, it is possible for a slave device to send an interrupt request (IRQ) to the master using the dedicated SS line for that slave device. The interrupt request may be sent at any time. For example, the interrupt request may be sent at a time between the normal polling of slave device 1 and the next polling time of slave device 1. In this way, the SS lines 25-27 are used for bi-directional communication between master device and slave device. This contrasts with conventional operation of the SPI, where the SS line is entirely controlled by the master device in a uni-directional manner (master to slave).

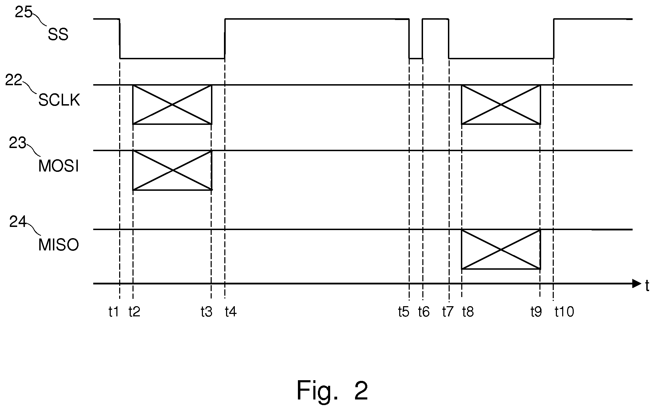

Figure 2 shows an example of signalling between the master device 10 and the slave device 1 over the SPI 20. Figure 2 only shows the SS line 25 between the master device 10 and the slave device 1. Other SS lines 26, 27 are not shown. At time t1 the master device 10 initiates a data transfer to the slave device 1 by changing the SS line 25 from a high state to a low state. This notifies the slave device 1 that it has been selected for communication, and can listen to the MOSI line 23. At time t2, the master device 10 starts to send data to the slave 1. Data is sent synchronously with the clock signal on line SCLK 22. Data transfer ends at time t3 and at time t4 the master changes the SS line 25 from a low state to a high state to end the communication with the slave device 1. At time t5 the slave device 1 signals an interrupt request to the master device 10 by changing the SS line 25 from a high state to a low state. The slave device 1 returns the SS line 25 from the low state to the high state at time t6. The interrupt request is received by the master device 10. At time t7 the master device 10 changes the SS line 25 from a high state to a low state. This notifies the slave device 1 that it has been selected for communication, and can use the MISO line 24. At time t8, the slave device 1 starts to send data to the master device 10. Data is sent synchronously with the clock signal on line SCLK 22. Data transfer ends at time t9 and at time t10 the master changes the SS line 25 from a low state to a high state to end the communication with the slave device 1.

The interrupt request may be detected on an edge of the signal on the SS line. That is, the master device 10 may detect the transition from the high state to the low state. In that case, the duration of the low state (t5-t6) can be a very short period of time, such as a few nanoseconds. Alternatively, the master device 10 may detect the state itself (i.e. low state or high state) rather than the transition between states. Note that, for clarity, the time line of Figure 2 is not necessarily to a linear scale.

In the example exchange of Figure 2, the slave device 1 is selected (at time t7) soon after the signalling of the interrupt request (at time t5). The master device may have a policy for handling interrupt requests. For example, when the master device 10 receives an interrupt request, it may wait until communication with the currently selected slave device has completed and then select the slave device which sent the interrupt request, or it may abandon communication with the currently selected slave device and then immediately select the slave device which sent the interrupt request. A slave may signal an important information, such as an alert of a warning condition, and it may be useful for the master to receive this alert as soon as possible. If the master device 10 receives interrupt requests from multiple slave devices, then it may service those requests in order of receipt, by order of priority allocated to those slave devices, by a combination of order of receipt and priority, or by some other criterion or criteria.

The operation described above can require that the master device 10, or the slave device 1-3, can change the state of the SS line. The slave device can change the state of the SS line to signal an interrupt request. The master device can change the state of the SS line to signal slave selection. The inactive state of the SS line is the high state (logical '1') and the active state of the SS line is the low state (logical '0'). The functionality can be summarised as:
- the SS line remains in the high state if any of the master device or the slave device does not want to activate the SS line;
- the SS line can be changed to the low state if one of the master device or the slave device want to activate the SS line.
Additionally, the SS line can remain in the low state if both the master device and the slave device want to activate the SS line.

The SS line can be controlled by the master device in the same way as a conventional SPI. As soon as the master device 10 has data to send, it can put the SS line to the low (active) state. When the slave device has data to send, it can put the SS line low just long enough to signal an interrupt request into the master component. Then, the master device can activate an SPI exchange to retrieve data from the slave device.

If the master device and the slave device together change the SS line to the low state it means that the master device has data to send to the slave device. As SPI is a full duplex link with MOSI and MISO lines 23, 24, the slave device can send data to the master device during the period when it is selected. In this case where the master device and slave device both activate the SS line, the interruption request will not be seen by the master, as the SS line is already low. However, as the slave device is already selected, it can send data to the master device 10 over the MISO line 24.

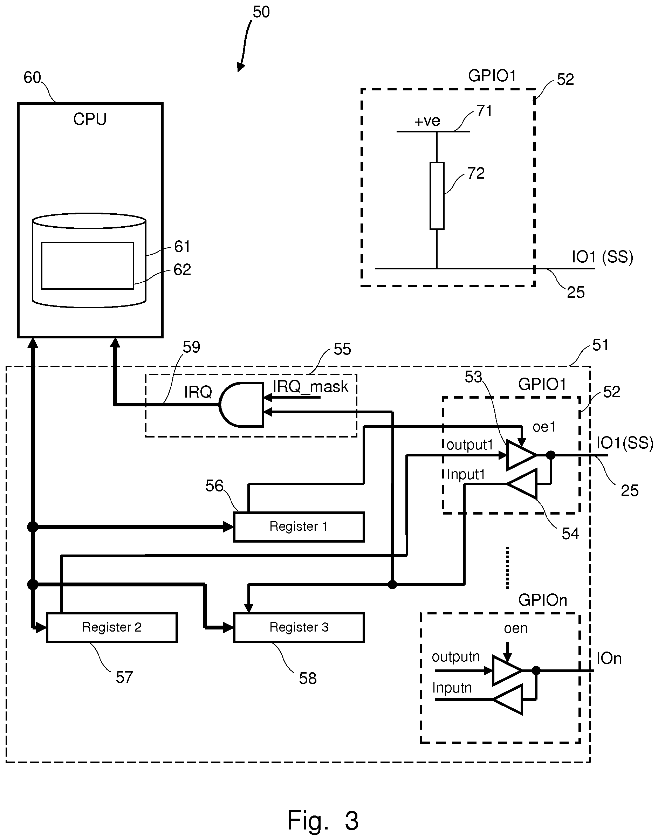

Figure 3 shows an example of apparatus 50 at a device. Apparatus 50 can be used at a master device 10 or at one of the slave devices 1-3. The apparatus 50 comprises a processor (CPU) 60 and an input/output stage 51 for connecting with the lines of the SPI 20. In this example, the input/output stage 51 includes General Purpose Input/Output (GPIO) modules 52. One GPIO 52 is shown in detail. GPIOs are hardware modules present in most microcontroller chips which enable the microcontroller to control electrical signals outside the chip. The GPIO 52 can drive a signal on a line to a high state (logical '1') or a low state (logical '0'). Also, the GPIO can enter a high impedance state and read the value (state) of a signal on the line. This allows the apparatus to determine if another device connected to the line 25 has changed the state of the line. A simplified GPIO comprises an output buffer 53 which can drive the signal connected to the line of the interface. The output buffer 53 can be controlled by another signal (oe for output enable) which determines if the buffer 53 can drive this signal (writing mode) or if the buffer 53 is in the high impedance state (reading mode). Input buffer 54 reads the value present on the line 25. Register 56 stores a value for control signal oe1. Register 57 stores a value for applying to the output buffer 53. Register 58 stores a value read from the input buffer 54. The registers 56, 57, 58 can be accessed by the CPU 60, providing full control of the GPIOs.

The apparatus 50 at a master device 10 also comprises hardware logic 55 which can notify the CPU 60 when the SS line is changed to an active state by the slave device. In this example, the logic comprises an AND gate which receives an input from the input buffer 54 representative of the SS line, and an input IRQ_mask. When the input from the input buffer equals the IRQ_mask, the IRQ output 59 of gate 55 goes high. IRQ_mask represents a logic value of the input buffer needed for an IRQ to be signalled, and can be a logical '0'. An interrupt request (IRQ) 59 is output to the CPU 60 depending on the state of the input buffer 54 of the GPIO 52. While Figure 3 shows hardware logic 55 performing the detection of a change of state when a slave device changes the SS line to an active state, it will be understood that this functionality can be implemented in other ways. For example, an output of register 3, 58, can be read by the CPU 60 and logic in the CPU can detect when a slave device changes the SS line to an active state, by detecting when the signal read from register 3 changes to a logical '0'. This is a kind of polling method by the CPU. Polling can require processing resources of the CPU compared to the use of logic which delivers an interrupt signal input to the CPU, as shown in Figure 3.

As described above, the functionality of the input/output stage 51 is configured to:
- allow the SS line to remain in the inactive (high) state if any of the master device or the slave device does not want to activate the SS line;
- the SS line can be changed to the active (low) state if one of the master device or the slave device want to activate the SS line.
Additionally, the SS line can remain in the active (low) state if both the master device and the slave device want to activate the SS line.

One way of achieving this functionality is for the master device and the slave device to control the SS line with an open drain (or open collector) output and a pull-up resistor. The inset to Figure 3 schematically shows an example of this type of output, applied to a GPIO module 52. The GPIO module 52 can have the elements shown in the main part of Figure 3. A pull-up resistor 72 connects between SS line 25 and a supply rail 71. If the device does not want to activate the SS line 25, the line remains connected to the supply rail 71 via the pull-up resistor 72, thereby ensuring a definite logical state is signalled to the other device(s) connected to the SS line 25. If the device, or another device connected to the SS line 25, wants to activate the SS line 25, the SS line 25 can be put into the active (low) state. The pull-up resistor 72 prevents a short to ground.

The apparatus 50 shown in Figure 3 can be used at a master device 10 or at a slave device 1-3. In the case where the apparatus shown in Figure 3 is used at a master device 10, the other GPIOs shown in Figure 3 can connect to other SS lines 26, 27.

The processor 60 may be a microprocessor any other suitable type of processor for executing instructions to control the operation of the device. Processor-executable instructions 62 may be provided using any computer-readable media, such as memory 61. Memory 61 may be located with the processor 60, or communicatively coupled to the processor 60. The processor-executable instructions 62 can include instructions for communicating with one or more slave devices using an SPI link. The processor-executable instructions 62 can comprise instructions for implementing the functionality of any of the described methods. For example, when implemented at a master device 10, instructions 62 can cause the processor 60 to determine when a slave device changes the SS line to an active state. When implemented at a slave device 1-3, instructions 62 can cause the processor 60 to signal an interrupt request to the master device 10 by changing a state of the slave select line 25 from a first state indicative of an inactive state to a second state indicative of an active state. The memory 61 can be of any suitable type, such as read-only memory (ROM), random access memory (RAM), a storage device of any type such as a magnetic or optical storage device.

In the above description, the inactive state of the SS line is the high state (logical '1') and the active state of the SS line is the low state (logical '0'). This is a typical convention for SPI. It is possible to use a different convention, where the inactive state of the SS line is the low state (logical '0') and the active state of the SS line is the high state (logical 1'), providing all devices follow this convention.

Modifications and other embodiments of the disclosed invention will come to mind to one skilled in the art having the benefit of the teachings presented in the foregoing descriptions and the associated drawings. Therefore, it is to be understood that the invention is not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method of communicating between a slave device (1) and a master device (10) using a Serial Peripheral Interface (20), the Serial Peripheral Interface (20) comprising a slave select line (25), the method comprising at the slave device (1):
signalling an interrupt request to the master device (10) by changing a state of the slave select line (25) from a first state indicative of an inactive state to a second state indicative of an active state.

2. A method according to claim 1 wherein the signalling further comprises returning the slave select line (25) to the first state.

3. A method according to claim 2 further comprising:
waiting for the master device (10) to put the slave select line (25) to the second state; and
sending data from the slave device (1) over a data line of the Serial Peripheral Interface (20).

4. A method according to any one of the preceding claims wherein the slave select line (25) is connected to an input/output stage (52) of the slave device (1) so that:
the slave select line (25) remains in the first state if the master device (10) or the slave device (1) does not change the state of the slave select line (25); and
the slave select line (25) changes to the second state if the master device (10) or the slave device (1) wants to change the state of the slave select line (25).

5. A method of communicating between a slave device (1) and a master device (10) using a Serial Peripheral Interface (20), the Serial Peripheral Interface (20) comprising a slave select line (25) per slave device, the method comprising at the master device (10):
determining when the slave device (1) has requested an interrupt by detecting when the slave device (1) changes the slave select line (25) from a first state indicative of an inactive state to a second state indicative of an active state.

6. A method according to claim 5 further comprising, in response to determining that the slave device (1) has requested an interrupt, the slave select line having been returned to the first state;
selecting the slave device (1) by putting the slave select line (25) into the second state; and
retrieving data from the slave device (1) over a data line of the Serial Peripheral Interface (20).

7. A method according to claim 5 or 6 wherein there is a plurality of slave devices (1-3), each connected to the master device (10) by a respective slave select line (25-27), and the method comprises monitoring the slave select lines (25-27) of the plurality of slave devices (1-3).

8. A method according to any one of claims 5 to 7 wherein the slave select line (25) is connected to an input/output stage (52) at the master device (10) so that:
the slave select line (25) remains in the first state if the master device (10) or the slave device (1) does not change the state of the slave select line (25); and
the slave select line (25) changes to the second state if the master device (10) or the slave device (1) wants to change the state of the slave select line (25).

9. A method according to claim 4 or 8 wherein the input/output stage is a general purpose input output module.

10. A method according to any one of the preceding claims wherein the first state is a high state and the second state is a low state.

11. A method according to any one of the preceding claims wherein the Serial Peripheral Interface (20) further comprises a clock line (22), a Master Out Slave In data line (23) and a Master In Slave Out data line (24).

12. Apparatus at a slave device (1) comprising:
a Serial Peripheral Interface (29) to communicate with a master device (10), the Serial Peripheral Interface (20) comprising a slave select line (25);
wherein the apparatus is configured to signal an interrupt request to the master device (10) by changing a state of the slave select line (25) from a first state indicative of an inactive state to a second state indicative of an active state.

13. Apparatus according to claim 12 wherein the Serial Peripheral Interface (29) comprises an input/output stage (52) which is configured so that:
the slave select line (25) remains in the first state if the master device (10) or the slave device (1) does not change the state of the slave select line (25); and
the slave select line (25) changes to the second state if the master device (10) or the slave device (1) wants to change the state of the slave select line (25).

14. Apparatus at a master device (10) comprising:
a Serial Peripheral Interface (28) to communicate with a slave device (1), the Serial Peripheral Interface (28) comprising a slave select line (25) per slave device; wherein the apparatus is configured to determine when the slave device (11) has requested an interrupt by detecting when the slave device (1) has caused the slave select line (25) to change from a first state indicative of an inactive state to a second state indicative of an active state.

15. Apparatus according to claim 14 wherein the Serial Peripheral Interface (28) comprises an input/output stage (52) which is configured so that:
the slave select line (25) remains in the first state if the master device (10) or the slave device (1) does not change the state of the slave select line (25); and
the slave select line (25) changes to the second state if the master device (10) or the slave device (1) wants to change the state of the slave select line (25).

## Patentansprüche

1. Verfahren zum Kommunizieren zwischen einem Slave-Gerät (1) und ein Master-Gerät (10) unter Verwendung einer seriellen Peripherieschnittstelle (20), wobei die serielle Peripherieschnittstelle (20) eine Slave-Ansteuerleitung (25) umfasst, und das Verfahren am Slave-Gerät (1) umfasst:
Signalisieren einer Unterbrechungsanforderung an das Master-Gerät (10) durch Wechseln eines Zustands der Slave-Ansteuerleitung (25) von einem ersten Zustand, der einen inaktiven Zustand anzeigt, in einen zweiten Zustand, der einen aktiven Zustand anzeigt.

2. Verfahren nach Anspruch 1, wobei das Signalisieren ferner ein Zurückversetzen der Slave-Ansteuerleitung (25) in den ersten Zustand umfasst.

3. Verfahren nach Anspruch 2, ferner umfassend:
Warten darauf, dass das Master-Gerät (10) die Slave-Ansteuerleitung (25) in den zweiten Zustand versetzt; und
Senden von Daten vom Slave-Gerät (1) über eine Datenleitung der seriellen Peripherieschnittstelle (20).

4. Verfahren nach einem der vorhergehenden Ansprüche, wobei die Slave-Ansteuerleitung (25) mit einer Eingangs-/Ausgangsstufe (52) des Slave-Geräts (1) verbunden ist, so dass:
die Slave-Ansteuerleitung (25) im ersten Zustand bleibt, falls das Master-Gerät (10) oder das Slave-Gerät (1) den Zustand der Slave-Ansteuerleitung (25) nicht ändert; und
die Slave-Ansteuerleitung (25) in den zweiten Zustand wechselt, falls das Master-Gerät (10) oder das Slave-Gerät (1) den Zustand der Slave-Ansteuerleitung (25) zu ändern wünscht.

5. Verfahren zum Kommunizieren zwischen einem Slave-Gerät (1) und einem Master-Gerät (10) unter Verwendung einer seriellen Peripherieschnittstelle (20), wobei die serielle Peripherieschnittstelle (20) eine Slave-Ansteuerleitung (25) pro Slave-Gerät umfasst, und das Verfahren am Master-Gerät (10) umfasst:
Bestimmen, wenn das Slave-Gerät (1) eine Unterbrechung angefordert hat, durch Erkennen, wenn das Slave-Gerät (1) die Slave-Ansteuerleitung (25) von einem ersten Zustand, der einen inaktiven Zustand anzeigt, in einen zweiten Zustand wechselt, der einen aktiven Zustand anzeigt.

6. Verfahren nach Anspruch 5, ferner umfassend, dass die Slave-Ansteuerleitung in Reaktion auf ein Bestimmen, dass das Slave-Gerät (1) eine Unterbrechung angefordert hat, in den ersten zurückversetzt wurde;
Auswählen des Slave-Geräts (1) durch Versetzen der Slave-Ansteuerleitung (25) in den zweiten Zustand; und
Abrufen von Daten vom Slave-Gerät (1) über eine Datenleitung der seriellen Peripherieschnittstelle (20).

7. Verfahren nach Anspruch 5 oder 6, wobei eine Vielzahl von Slave-Geräten (1 - 3) vorhanden ist, die jeweils durch eine jeweilige Slave-Ansteuerleitung (25 - 27) mit dem Master-Gerät (10) verbunden sind, und das Verfahren ein Überwachen der Slave-Ansteuerleitungen (25 - 27) der Vielzahl von Slave-Geräten (1 - 3) umfasst.

8. Verfahren nach einem der Ansprüche 5 bis 7, wobei die Slave-Ansteuerleitung (25) mit einer Eingangs-/Ausgangsstufe (52) am Master-Gerät (10) verbunden ist, so dass:
die Slave-Ansteuerleitung (25) im ersten Zustand bleibt, falls das Master-Gerät (10) oder das Slave-Gerät (1) den Zustand der Slave-Ansteuerleitung (25) nicht ändert; und
die Slave-Ansteuerleitung (25) in den zweiten Zustand wechselt, falls das Master-Gerät (10) oder das Slave-Gerät (1) den Zustand der Slave-Ansteuerleitung (25) zu ändern wünscht.

9. Verfahren nach Anspruch 4 oder 8, wobei die Eingangs-/Ausgangsstufe ein Universal-Eingangs-/Ausgangsmodul ist.

10. Verfahren nach einem der vorhergehenden Ansprüche, wobei der erste Zustand ein H-Zustand ist, und der zweite Zustand ein L-Zustand ist.

11. Verfahren nach einem der vorhergehenden Ansprüche, wobei die serielle Peripherieschnittstelle (20) ferner eine Taktleitung (22), eine Master-Ausgangs-Slave-Eingangs-Datenleitung (23) und eine Master-Eingangs-Slave-Ausgangs-Datenleitung (24) umfasst.

12. Vorrichtung an einem Slave-Gerät (1), umfassend:
eine serielle Peripherieschnittstelle (29) zum Kommunizieren mit einem Master-Gerät (10), wobei die serielle Peripherieschnittstelle (20) eine Slave-Ansteuerleitung (25) umfasst;
wobei die Vorrichtung so konfiguriert ist, dass sie dem Master-Gerät (10) durch Wechseln eines Zustands der Slave-Ansteuerleitung (25) von einem ersten Zustand, der einen inaktiven Zustand anzeigt, in einen zweiten Zustand, der einen aktiven Zustand anzeigt, eine Unterbrechungsanforderung signalisiert.

13. Vorrichtung nach Anspruch 12, wobei die serielle Peripherieschnittstelle (29) eine Eingangs-/Ausgangsstufe (52) umfasst, die so konfiguriert ist, dass:
die Slave-Ansteuerleitung (25) im ersten Zustand bleibt, falls das Master-Gerät (10) oder das Slave-Gerät (1) den Zustand der Slave-Ansteuerleitung (25) nicht ändert; und
die Slave-Ansteuerleitung (25) in den zweiten Zustand wechselt, falls das Master-Gerät (10) oder das Slave-Gerät (1) den Zustand der Slave-Ansteuerleitung (25) zu ändern wünscht.

14. Vorrichtung an einem Master-Gerät (10), umfassend:
eine serielle Peripherieschnittstelle (28) zum Kommunizieren mit einem Slave-Gerät (1), wobei die serielle Peripherieschnittstelle (28) eine Slave-Ansteuerleitung (25) pro Slave-Gerät umfasst;
wobei die Vorrichtung so konfiguriert ist, dass sie durch Erkennen, wenn das Slave-Gerät (1) die Slave-Ansteuerleitung (25) von einem ersten Zustand, der einen inaktiven Zustand anzeigt, in einen zweiten Zustand wechselt, der einen aktiven Zustand anzeigt, bestimmt, wenn das Slave-Gerät (11) eine Unterbrechung angefordert hat.

15. Vorrichtung nach Anspruch 14, wobei die serielle Peripherieschnittstelle (28) eine Eingangs-/Ausgangsstufe (52) umfasst, die so konfiguriert ist, dass:
die Slave-Ansteuerleitung (25) im ersten Zustand bleibt, falls das Master-Gerät (10) oder das Slave-Gerät (1) den Zustand der Slave-Ansteuerleitung (25) nicht ändert; und
die Slave-Ansteuerleitung (25) in den zweiten Zustand wechselt, falls das Master-Gerät (10) oder das Slave-Gerät (1) den Zustand der Slave-Ansteuerleitung (25) zu ändern wünscht.

## Revendications

1. Procédé de communication entre un dispositif esclave (1) et un dispositif maître (10) au moyen d'une interface périphérique série (20), l'interface périphérique série (20) comprenant une ligne de sélection esclave (25), le procédé consistant, au niveau du dispositif esclave (1), à :
signaler une demande d'interruption au dispositif maître (10) en changeant un état de la ligne de sélection esclave (25) d'un premier état révélateur d'un état inactif à un second état révélateur d'un état actif.

2. Procédé selon la revendication 1, dans lequel le signalement consiste en outre à remettre la ligne de sélection esclave (25) dans le premier état.

3. Procédé selon la revendication 2, consistant en outre à :
attendre que le dispositif maître (10) mette la ligne de sélection esclave (25) dans le second état ; et
envoyer une donnée provenant du dispositif esclave (1) sur une ligne de données de l'interface périphérique série (20).

4. Procédé selon l'une quelconque des revendications précédentes, dans lequel la ligne de sélection esclave (25) est connectée à un étage d'entrée/sortie (52) du dispositif esclave (1) de sorte que :
la ligne de sélection esclave (25) reste dans le premier état si le dispositif maître (10) ou le dispositif esclave (1) ne change pas l'état de la ligne de sélection esclave (25) ; et
la ligne de sélection esclave (25) change dans le second état si le dispositif maître (10) ou le dispositif esclave (1) veut changer l'état de la ligne de sélection esclave (25).

5. Procédé de communication entre un dispositif esclave (1) et un dispositif maître (10) au moyen d'une interface périphérique série (20), l'interface périphérique série (20) comprenant une ligne de sélection esclave (25) par dispositif esclave, le procédé consistant, au niveau du dispositif maître (10), à :
déterminer quand le dispositif esclave (1) a demandé une interruption en détectant quand le dispositif esclave (1) change la ligne de sélection esclave (25) d'un premier état révélateur d'un état inactif à un second état révélateur d'un état actif.

6. Procédé selon la revendication 5, consistant en outre, en réponse à la détermination que le dispositif esclave (1) a demandé une interruption, la ligne de sélection esclave ayant été remise dans le premier état, à :
sélectionner le dispositif esclave (1) en mettant la ligne de sélection esclave (25) dans le second état ; et
récupérer une donnée provenant du dispositif esclave (1) sur une ligne de données de l'interface périphérique série (20).

7. Procédé selon la revendication 5 ou 6, comprenant une pluralité de dispositifs esclaves (1-3) connectés chacun au dispositif maître (10) par une ligne de sélection esclave (25-27) respective, et le procédé consistant à surveiller les lignes de sélection esclaves (25-27) de la pluralité de dispositifs esclaves (1-3).

8. Procédé selon l'une quelconque des revendications 5 à 7, dans lequel la ligne de sélection esclave (25) est connectée à un étage d'entrée/sortie (52) au niveau du dispositif maître (10) de sorte que :
la ligne de sélection esclave (25) reste dans le premier état si le dispositif maître (10) ou le dispositif esclave (1) ne change pas l'état de la ligne de sélection esclave (25) ; et
la ligne de sélection esclave (25) change dans le second état si le dispositif maître (10) ou le dispositif esclave (1) veut changer l'état de la ligne de sélection esclave (25).

9. Procédé selon la revendication 4 ou 8, dans lequel l'étage d'entrée/sortie est un module d'entrée/sortie polyvalent.

10. Procédé selon l'une quelconque des revendications précédentes, dans lequel le premier état est un état haut, et le second état est un état bas.

11. Procédé selon l'une quelconque des revendications précédentes, dans lequel l'interface périphérique série (20) comprend en outre une ligne d'horloge (22), une ligne sortie maître/entrée esclave (23) et une ligne entrée maître/sortie esclave (24).

12. Appareil au niveau d'un dispositif esclave (1), comprenant :
une interface périphérique série (29) pour communiquer avec un dispositif maître (10), l'interface périphérique série (20) comprenant une ligne de sélection esclave (25) ;
l'appareil étant conçu pour signaler une demande d'interruption au dispositif maître (10) en changeant un état de la ligne de sélection esclave (25) d'un premier état révélateur d'un état inactif à un second état révélateur d'un état actif.

13. Appareil selon la revendication 12, dans lequel l'interface périphérique série (29) comprenant un état d'entrée/sortie (52) conçu de sorte que :
la ligne de sélection esclave (25) reste dans le premier état si le dispositif maître (10) ou le dispositif esclave (1) ne change pas l'état de la ligne de sélection esclave (25) ; et
la ligne de sélection esclave (25) change dans le second état si le dispositif maître (10) ou le dispositif esclave (1) veut changer l'état de la ligne de sélection esclave (25).

14. Appareil au niveau d'un dispositif maître (10), comprenant :
une interface périphérique série (28) pour communiquer avec un dispositif esclave (1), l'interface périphérique série (28) comprenant une ligne de sélection esclave (25) par dispositif esclave ;
l'appareil étant conçu pour déterminer quand le dispositif esclave (11) a demandé une interruption en détectant quand le dispositif esclave (1) a provoqué le changement de la ligne de sélection esclave (25) d'un premier état révélateur d'un état inactif à un second état révélateur d'un état actif.

15. Appareil selon la revendication 14, dans lequel l'interface périphérique série (28) comprenant un état d'entrée/sortie (52) conçu de sorte que :
la ligne de sélection esclave (25) reste dans le premier état si le dispositif maître (10) ou le dispositif esclave (1) ne change pas l'état de la ligne de sélection esclave (25) ; et
la ligne de sélection esclave (25) change dans le second état si le dispositif maître (10) ou le dispositif esclave (1) veut changer l'état de la ligne de sélection esclave (25).
